# EUROPEAN PATENT APPLICATION

(11) **EP 4 535 843 A1**
(43) Date of publication of application: **09.04.2025**
(21) Application number: 23814908.2
(22) Date of filing: 09.05.2023
(51) Int. Cl.: H04W 8/24

(54) **INFORMATION TRANSMISSION METHOD AND APPARATUS, AND STORAGE MEDIUM AND ELECTRONIC APPARATUS**

(30) Priority: 31.05.2022 CN 202210609717
(71) Applicant: ZTE Corporation, Shenzhen, Guangdong 518057 (CN)
(72) Inventor: LU, Zhaohua, Shenzhen, Guangdong 518057 (CN); LIU, Kun, Shenzhen, Guangdong 518057 (CN); ZHENG, Guozeng, Shenzhen, Guangdong 518057 (CN); XIAO, Huahua, Shenzhen, Guangdong 518057 (CN)
(74) Representative: Carangelo, Pierluigi
(86) International application number: PCT/CN2023/093056
(87) International publication number: WO 2023/231722

(57) **Abstract**

Provided in the present disclosure are an information transmission method and apparatus, and a storage medium and an electronic apparatus. The method comprises: sending first fallback request information to a third node or a second node, wherein the first fallback request information comprises at least one of the following: a fallback cause; functional module information of a first fallback; falling back to a legacy mode; and a start time of the first fallback.

## Description

### Technical Field

Embodiments of the present disclosure relate to the field of communications, and in particular, to an information transmission method and apparatus, and a storage medium and an electronic apparatus.

### Background

Large-scale commercialization of the 5th Generation Mobile Communication System (5G) New Radio (NR) is accelerating transformation of economy and society towards digitalization, networking, and intelligence, and promoting the network into a new era of interconnection of all things. Rapidly emerging application demands in smart cities, intelligent transportation, and smart industrial production have led to a continuous strengthening of a trend towards differentiated network device capabilities, diversified network functions, and intelligent network management and control, which further promotes arrival of the 6th Generation Mobile Communication System (6G) characterized by intelligent connectivity. In typical application scenarios of 6G, represented by smart cities, intelligent transportation, and smart homes, there are a large number of intelligent automated devices with highly differentiated capabilities, which pose increasingly stringent communication requirements in various aspects such as extremely low latency, extremely high reliability, ultra-wide bandwidth, and massive access. Further, applications of intelligent automation types have also put forward requirements for perception capabilities, such as high precision and high resolution. On one hand, the increasing number of wireless communication and perception devices make the contradiction between the endless growth of service demands and the limited wireless resources and computing power more prominent. On the other hand, the realization of the 6G vision requires a closed-loop information flow processing that includes the acquisition of environmental perception information, information interaction and sharing, intelligent information processing, and the distribution of control information (including control information for communication networks and control commands for application execution devices) at each layer. The existing wireless network architecture and related technologies are already difficult to meet the emerging application demands of the post-5G (5G and Beyond, B5G)/6G era, and there is an urgent need to develop new network architectures and enabling technologies that efficiently utilize resources and intelligently adapt to differentiated applications.

The rise of Artificial Intelligence (AI) technologies, represented by deep learning, reinforcement learning, and distributed learning, has had a wide and profound impact on various fields such as communication network optimization, intelligent perception, and control applications, and greatly promotes the possibility of deep integration of the fields of communication, perception, and computing. Based on this, if 6G achieves the integration and symbiosis of communication and perception capabilities under the empowerment of intelligent computing technologies, the 6G network will be endowed with the ability to intelligently perceive the physical world and map the digital world at all times and everywhere. The massive number of new intelligent terminals connected will rely on continuously enhanced computing power for learning, communication, cooperation, and competition, thereby achieving self-learning, self-operation, and self-maintenance of the network, and thus realizing the vision of integrated communication, perception, and computing network of 6G.

Currently, in the 5G NR, system information is sent by firstly sending a Master Information Block (MIB) via a Physical Broadcast Channel (PBCH) in Synchronization Signal Blocks (SSB, such as Primary Synchronization Signals, Synchronization Signals, and PBCH blocks), and then sending System Information Blocks (SIB) via a Physical Downlink Shared Channel (PDSCH). The SIB may be divided into multiple blocks respectively carrying different system information. In the typical application scenarios of 6G represented by smart cities, intelligent transportation, and smart homes, there are a large number of intelligent automated devices with highly differentiated capabilities, which pose increased communication requirements for extremely low latency, extremely high reliability, ultra-wide bandwidth, and massive access. This means that in the 6G era, the types of terminals accessing the system will become very diverse, and using the limited combination of data channel generation methods of NR will greatly limit the data transmission efficiency of the terminals, and also affect the system spectrum efficiency.

There is no scheme for an interaction process of first fallback request information between a first node (e.g., a terminal) and a second node or third node in the related art, and a solution to this problem has not been proposed yet.

### Summary

Embodiments of the present disclosure provide an information transmission method and apparatus, and a storage medium and an electronic apparatus, which at least solve the problem in the related art that there is no scheme for an interaction process of first fallback request information between a first node (e.g., a terminal) and a second node or third node.

According to some embodiments of the present disclosure, provided is an information transmission method, including: sending first fallback request information to a third node or a second node, wherein the first fallback request information includes at least one of: a fallback reason, functional module information of a first fallback, falling back to a legacy mode, and a start time of the first fallback.

According to another embodiment of the present disclosure, provided is an information transmission apparatus, including: a first sending module, configured to send first fallback request information to a third node or a second node, wherein the first fallback request information includes at least one of: a fallback reason, functional module information of a first fallback, falling back to a legacy mode, and a start time of the first fallback.

According to another embodiment of the present disclosure, provided is an information transmission apparatus, including: a second sending module, configured to send first fallback indication information to a first node, wherein the first fallback indication information includes at least one of: functional module information of a third fallback, falling back to a legacy mode, and a start time of the third fallback.

According to another embodiment of the present disclosure, also provided is a computer readable storage medium. The computer readable storage medium stores a computer program, and the computer program, when running on a processor, is configured to cause the processor to execute the operations in any one of the method embodiments.

According to another embodiment of the present disclosure, also provided is an electronic apparatus, including a memory and a processor, wherein the memory stores a computer program, and the processor is configured to run the computer program so as to execute the operations in any one of the method embodiments.

According to the present disclosure, first fallback request information is sent to a third node or a second node, wherein the first fallback request information includes at least one of: a fallback reason, functional module information of a first fallback, falling back to a legacy mode, and a start time of the first fallback. By means of the present disclosure, the problem in the related art that there is no scheme for an interaction process of first fallback request information between a first node (e.g., a terminal) and a second node or third node may be solved, and the technical effect that the first node sends the first fallback request information to the third node or the second node is achieved.

### Brief Description of the Drawings

Fig. 1 is a block diagram of the hardware structure of an exemplary computer terminal of an information transmission method according to some embodiments of the present disclosure;
Fig. 2 is a flowchart of an information transmission method according to some embodiments of the present disclosure;
Fig. 3 is a flowchart of another information transmission method according to some embodiments of the present disclosure;
Fig. 4 is a schematic flowchart (1) of an exemplary information transmission method according to some embodiments of the present disclosure;
Fig. 5 is a schematic flowchart (2) of an exemplary information transmission method according to some embodiments of the present disclosure;
Fig. 6 is a schematic flowchart (3) of an exemplary information transmission method according to some embodiments of the present disclosure;
Fig. 7 is a schematic flowchart (4) of an exemplary information transmission method according to some embodiments of the present disclosure;
Fig. 8 is a schematic flowchart (5) of an exemplary information transmission method according to some embodiments of the present disclosure;
Fig. 9 is a structural block diagram of an information transmission apparatus according to some embodiments of the present disclosure; and
Fig. 10 is a structural block diagram of another information transmission apparatus according to some embodiments of the present disclosure.

### Detailed Description of the Embodiments

Embodiments of the present disclosure will be described below in detail with reference to the accompanying drawings and in conjunction with embodiments.

It should be noted that, terms such as "first" and "second" in the specification, claims, and accompanying drawings of the present disclosure are used to distinguish similar objects, but are not necessarily used to describe a specific sequence or order.

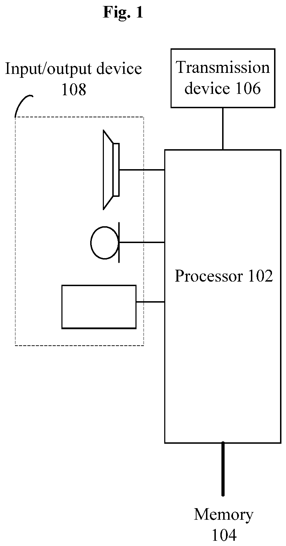

The method embodiments provided in the embodiments of the present disclosure may be executed in a mobile terminal, a computer terminal or a similar computing apparatus. Taking the execution on a mobile terminal as an example, Fig. 1 is a block diagram of the hardware structure of an exemplary mobile terminal of an information transmission method according to some embodiments of the present disclosure. As shown in Fig. 1, the mobile terminal may include one or more (only one is shown in Fig. 1) processors 102 (each of the one or more processors 102 may include, but are not limited to, a processing apparatus such as a microprocessor (e.g., a Micro Controller Unit (MCU)) or a programmable logic device (e.g., a Field Programmable Gate Array (FPGA))) and a memory 104 for storing data. The mobile terminal may further include a transmission device 106 for a communication function and an input/output device 108. Those having ordinary skill in the art may understand that the structure shown in Fig. 1 is merely exemplary, which does not limit the structure of the foregoing mobile terminal. For example, the mobile terminal may further include more or fewer components than shown in Fig. 1, or have a different configuration from that shown in Fig. 1.

The memory 104 may be configured to store a computer program, for example, a software program and a module of application software, such as a computer program corresponding to the information transmission method in the embodiments of the present disclosure. The one or more processors 102 run the computer program stored in the memory 104, so as to execute various function applications and data processing, that is, to implement the foregoing method. The memory 104 may include a high-speed random access memory, and may also include a non-volatile memory, such as one or more magnetic storage apparatuses, flash memory, or other non-volatile solid-state memory. In some instances, the memory 104 may further include a memory remotely located with respect to the one or more processors 102, which may be connected to the mobile terminal over a network. Examples of such network include, but are not limited to, the Internet, an intranet, a local area network, a mobile communication network, and combinations thereof.

The transmission device 106 is configured to receive or transmit data via a network. Specific examples of the described network may include a wireless network provided by a communication provider of the mobile terminal. In an example, the transmission device 106 may include a Network Interface Controller (NIC) that may be coupled to other network devices via a base station to communicate with the Internet. In an example, the transmission device 106 may be a Radio Frequency (RF) module for communicating wirelessly with the Internet.

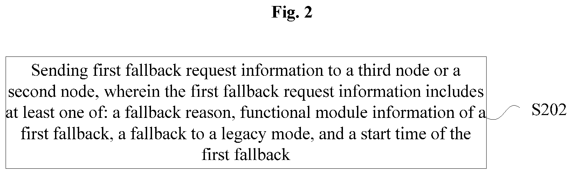

The present embodiment provides an information transmission method running on the described mobile terminal. Fig. 2 is a flowchart of an information transmission method according to some embodiments of the present disclosure. As shown in Fig. 2, the information transmission method includes the following operation S202.

In operation S202, first fallback request information is sent to a third node or a second node, wherein the first fallback request information includes at least one of: a fallback reason, functional module information of a first fallback, falling back to a legacy mode, and a start time of the first fallback.

By means of the described operation, a first node sends first fallback request information to a third node or a second node, wherein the first fallback request information includes at least one of: a fallback reason, functional module information of a first fallback, falling back to a legacy mode, and a start time of the first fallback. By means of the above operation, the problem in the related art that there is no scheme for an interaction process of first fallback request information between a first node (e.g., a terminal) and a second node or third node may be solved, and the technical effect that the first node sends the first fallback request information to the third node or the second node is achieved.

The foregoing operations may be, but is not limited to be, executed by a terminal.

It should be noted that the third node and the second node may be in the same entity, and may also be respectively in different entities.

It should be noted that one third node may correspond to a plurality of second nodes, that is, one third node may perform information interaction with a plurality of second nodes.

It should be noted that the third node may be an Artificial Intelligence (AI) server, an AI storage apparatus, or a node having a database/server/storage function.

In an exemplary embodiment, the first fallback request information may be sent to the third node in at least one of the following manners. The first fallback request information may be sent to the third node directly; or the first fallback request information may be sent to the second node, so that the second node forwards the first fallback request information to the third node.

In an exemplary embodiment, first fallback confirmation information sent by the third node or the second node is received. For example, the first fallback confirmation information sent by the third node or the second node may be received in at least one of the following manners. The first fallback confirmation information directly sent by the third node may be received; or the first fallback confirmation information sent by the third node to the second node and then forwarded by the second node may be received.

In an exemplary embodiment, after the first fallback request information is sent to the third node or the second node, the information transmission method may further include: first fallback confirmation information sent by the third node or the second node is received, wherein the first fallback confirmation information includes at least one of: indication information regarding whether to accept the first fallback request information, a start time of a second fallback, functional module information of the second fallback, and falling back to the legacy mode.

In an exemplary embodiment of the present disclosure, when the first node receives the first fallback confirmation information, it means that the third node or the second node agrees with (i.e., accepts) the fallback request of the first node. Further, the first fallback confirmation information may further include at least one of: a start time of the second fallback, functional module information of the second fallback, and falling back to a legacy mode.

In an exemplary embodiment of the present disclosure, the first fallback confirmation information at least includes indication information regarding whether to accept the fallback request information. When the indication information indicates to accept the fallback request information, the first fallback confirmation information may further include at least one of: a start time of a second fallback, functional module information of the second fallback, and falling back to the legacy mode.

When the indication information indicates not to accept the fallback request information, the first node continues to use the current functional module to communicate with the second node or the third node.

In an exemplary embodiment, after the first fallback confirmation information sent by the third node or the second node is received, the information transmission method may further include at least one of: determining, in a case where the first fallback confirmation information includes the functional module information of the second fallback, to use a functional module corresponding to the functional module information of the second fallback; determining, in a case where the first fallback confirmation information does not include the functional module information of the second fallback, to use a functional module corresponding to the functional module information of the first fallback; falling back to the legacy mode.

In an exemplary embodiment, the information transmission method may further include at least one of: in a case where the first fallback confirmation information includes the start time of the second fallback, after the start time of the second fallback, using a functional module to communicate with the second node, or using the legacy mode to communicate with the second node or the third node; in a case where the first fallback confirmation information does not include the start time of the second fallback, after the start time of the first fallback, using a functional module to communicate with the second node, or using the legacy mode to communicate with the second node or the third node.

In an exemplary embodiment, the functional module information includes at least one of: a name of a functional module; an index of the functional module; version information of the functional module; and a function realized by the functional module.

In an exemplary embodiment, in a case where the fallback reason is indicated by means of index information, a preset fallback reason is indicated by means of the index information of the fallback reason, and description information of the fallback reason is stored in at least one of the first node, the second node and the third node.

In an exemplary embodiment, a time at which the first fallback request information is sent to the third node is used as a time reference point, and the start time of the first fallback is represented by a time delay.

In an exemplary embodiment, a time at which the first fallback confirmation information sent by the third node is received is used as a time reference point, and the start time of the second fallback is represented by a time delay.

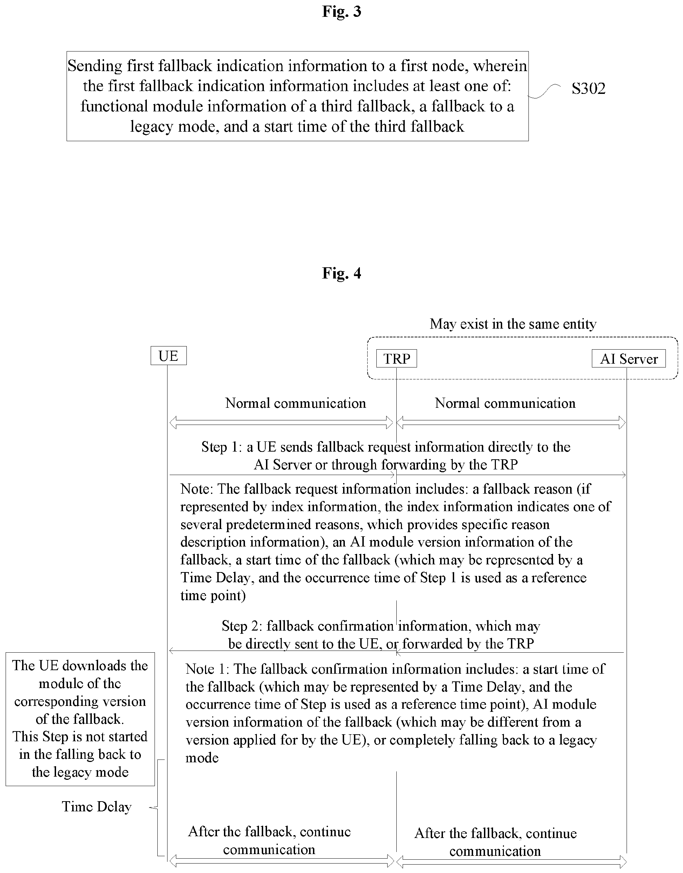

The embodiments of the present disclosure further provide an information transmission method running on a second node or a third node. Fig. 3 is a flowchart of another information transmission method according to some embodiments of the present disclosure. As shown in Fig. 3, the information transmission method includes the following operation S302.

In operation S302, first fallback indication information is sent to a first node, wherein the first fallback indication information includes at least one of: functional module information of a third fallback, falling back to a legacy mode, and a start time of the third fallback.

By means of the described operation, the second node or the third node may send the first fallback indication information to the first node, so that the problem of how to send first fallback indication information to a first node (e.g., a terminal) in the related art is solved, and the technical effect of sending the first fallback indication information to the first node is achieved.

It should be noted that the number of pieces of the functional module information of the third fallback is greater than or equal to 1, that is to say, the functional module information of the third fallback may include functional modules of one or more versions and/or one or more indexes.

In an exemplary embodiment, the first fallback indication information may be sent to the first node in at least one of the following manners. The first fallback indication information may be directly sent to the first node; or the first fallback indication information may be sent to the second node, so that the second node forwards the first fallback indication information to the first node.

In an exemplary embodiment, second fallback confirmation information sent by the first node is received. The second fallback confirmation information sent by the first node may be received in at least one of the following manners. The second fallback confirmation information directly sent by the first node may be received; or the second fallback confirmation information sent by the first node to the second node and then forwarded by the second node may be received.

In an exemplary embodiment, after the second fallback confirmation information sent by the first node is received, the information transmission method may further include at least one of: determining, in a case where the second fallback confirmation information includes the functional module information of the fourth fallback, to use a functional module corresponding to the functional module information of the fourth fallback; determining, in a case where the second fallback confirmation information does not include the functional module information of the fourth fallback, to use a functional module corresponding to the functional module information of the third fallback; falling back to the legacy mode.

It should be noted that, a satisfaction condition that the second fallback confirmation information does not include the functional module information of the fourth fallback is that the functional module information of the third fallback includes only one functional module.

In an exemplary embodiment, a time at which the first fallback indication information is sent to the first node is used as a time reference point, and the start time of the third fallback is represented by a time delay.

In an exemplary embodiment, a time at which the second fallback confirmation information sent by the first node is received is used as a time reference point, and the start time of the fourth fallback is represented by a time delay.

In an exemplary embodiment, after the first fallback indication information is sent to the first node, the information transmission method may further include: receiving second fallback confirmation information sent by the first node, wherein the second fallback confirmation information includes at least one of: a start time of a fourth fallback, functional module information of the fourth fallback, and information indicating falling back to the legacy mode, wherein the functional module information of the fourth fallback is obtained from the functional module information of the third fallback.

In an exemplary embodiment, in the information transmission method, the functional module information of the third fallback includes at least one piece of functional module information, wherein each of the at least one piece of functional module information includes at least one of: a name of a functional module; an index of the functional module; version information of the functional module; and a function realized by the functional module.

As an exemplary embodiment, the functional module information of the third fallback includes four pieces of functional module information, wherein the index information of the four functional modules is 0,1,2,3 respectively. The name, the version information and the implemented function of each functional module are as shown in Table 1 below.

**Table 1**

| Index of Functional Module | Name of Functional module | Version of Functional Module | Implemented Function |
|---|---|---|---|
| 0 | Modulation and Coding Module | V1.0 | Supporting modulation and coding for 1 antenna |
| 1 | Modulation and Coding Module | V2.0 | Supporting modulation and coding for at most 2 antennas |
| 2 | Modulation and Coding Module | V3.0 | Supporting modulation and coding for at most 8 antennas |
| 3 | Modulation and Coding Module | V4.0 | Supporting modulation and coding for at most 64 antennas |

In the current embodiment, the functions implemented by the four functional modules are all modulation and coding, but the versions corresponding to the four functional modules and the numbers of antennas that are specifically applicable are different for the four functional modules. The first node selects an applicable functional module according to the antenna configuration of the first node, and may send the corresponding index and/or name and/or version information and/or implemented function of the selected functional module to the second node or the third node.

In an exemplary embodiment, after the second fallback confirmation information sent by the first node is received, the information transmission method may further include at least one of: determining, in a case where the second fallback confirmation information includes the functional module information of the fourth fallback, to use a functional module downloaded corresponding to the functional module information of the fourth fallback; determining, in a case where the second fallback confirmation information does not include the functional module information of the fourth fallback, to use a functional module downloaded corresponding to the functional module information of the third fallback; falling back to the legacy mode.

In an exemplary embodiment, the information transmission method may further include at least one of: in a case where the second fallback confirmation information includes the start time of the fourth fallback, after the start time of the fourth fallback, using the functional module to communicate with a second node, or using the legacy mode to communicate with the second node; in a case where the second fallback confirmation information does not include the start time of the fourth fallback, after the start time of the third fallback, using the functional module to communicate with the second node, or using the legacy mode to communicate with the second node.

In an exemplary embodiment, the information transmission method may further include: sending, in the second fallback confirmation information or in first functional module request information after the second fallback confirmation information, functional module information required by the first node.

In an exemplary embodiment, the information transmission method may further include: sending, by a third node or a second node, response information for the functional module information required by the first node, wherein the response information includes at least one of: the functional module information required by the first node; fallback start time of the functional module information required by the first node.

In an exemplary embodiment, in the information transmission method, the operation of sending the first fallback indication information to the first node may include: sending the first fallback indication information to the first node through control information in a control channel. For example, the first fallback indication information may be sent to the first node through a Physical Downlink Control Channel (PDCCH).

In an exemplary embodiment, the information transmission method may further include at least one of: indicating, by using a format of control information, whether current control information is control information that triggers the first fallback indication information; carrying the first fallback indication information in the control information in the control channel for sending.

For example, a Downlink Control Information (DCI) format is used for indicating whether a current PDCCH is a PDCCH triggering the first fallback indication information.

In an exemplary embodiment, before indicating whether the current PDCCH is the PDCCH triggering the first fallback indication information by means of the DCI format, the information transmission method may further include: sending, by a second node, indication information, wherein the indication information is used for indicating whether a corresponding DCI is a normal DCI or a fallback DCI for indicating fallback.

The information transmission method in the foregoing embodiments is further described in combination with the following embodiments.

### Embodiment 1

In this embodiment, the information transmission method is described with reference to Fig. 4. Fig. 4 is a schematic flowchart (1) of an exemplary information transmission method according to some embodiments of the present disclosure. As shown in Fig. 4, the exemplary information transmission method includes the following steps.

In step 1, a User Equipment (UE) (equivalent to the described first node) sends fallback request information. The UE may choose to directly send the fallback request information to an AI Server (equivalent to the described third node), or send the fallback request information through the forwarding by a TRP (equivalent to the described second node). The fallback request information includes at least one of: a fallback reason, functional module information of the fallback, and a start time of the fallback.

It should be noted that when the described fallback reason is represented by index information, the index information represents a predetermined fallback reason, and specific reason description information is pre-stored in the UE (equivalent to the described first node)/the TRP (equivalent to the described second node)/the AI Server (equivalent to the described third node).

It should be noted that, the functional module information of the fallback includes at least one of: a name of the functional module, an index of the functional module, and version information of the functional module.

It should be noted that the aforementioned start time of the fallback may be represented by a Time Delay (equivalent to the described time delay), and the occurrence time of step 1 is used as a reference time point (equivalent to the described time reference point).

In step 2, the AI Server (equivalent to the described third node) sends fallback confirmation information. The AI Server may choose to directly send the fallback confirmation information to the UE (equivalent to the described first node) or send the fallback confirmation information through the forward by a TRP (equivalent to the described second node). The fallback confirmation information may include at least one of: a start time of the fallback, functional module version information of the fallback, and falling back to a legacy mode.

It should be noted that the start time of the fallback in step 2 may be represented by a Time Delay (equivalent to the described time delay), and the occurrence time of step 2 is used as a reference time point (equivalent to the described time reference point).

It should be noted that the functional module version information of the fallback in step 2 may be different from the version applied by the UE (equivalent to the described first node).

It should be noted that, the falling back to the legacy mode in step 2 includes: falling back to a predefined working mode, or falling back to a working mode that does not support a functional module.

In step 3a, after receiving the fallback confirmation information, the UE (equivalent to the described first node) downloads a functional module of a corresponding version; further, when an effective time of the functional module is reached, the UE (equivalent to the described first node) uses the functional module to communicate with the TRP (equivalent to the described second node).

In step 3b, after the UE (equivalent to the described first node) receives the fallback confirmation information, the UE falls back to the legacy mode to communicate with the TRP (equivalent to the described second node).

It should be noted that, only one of the foregoing step 3a and step 3b is executed, and after one of the foregoing step 3a and step 3b is executed, the other step of the foregoing step 3a and step 3b is not executed again in the current implementation.

It should be noted that the described TRP (equivalent to the described second node) and the AI Server (equivalent to the described third node) may exist in the same entity.

### Embodiment 2

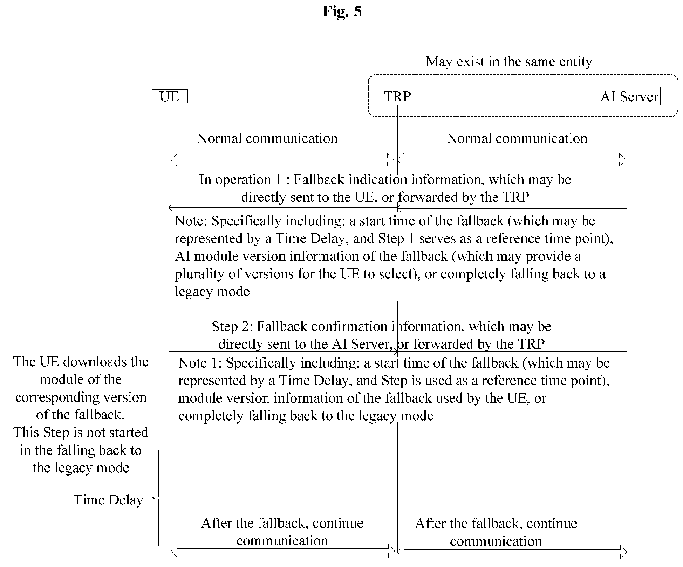

In this embodiment, an information transmission method is described with reference to Fig. 5. Fig. 5 is a schematic flowchart (2) of an exemplary information transmission method according to some embodiments of the present disclosure. As shown in Fig. 5, the exemplary information transmission method may include the following steps.

In step 1, an AI Server (equivalent to the described third node) sends fallback indication information. The AI Server may choose to directly send the fallback indication information to a UE (equivalent to the described first node), or to send the fallback indication information through the forwarding by a TRP (equivalent to the described second node). The fallback indication information includes at least one of: functional module information of the fallback; falling back to a legacy mode; a start time of the fallback. Further, the AI Server (equivalent to the third node) may provide functional modules of a plurality of versions.

It should be noted that, the functional module information of the fallback includes at least one of: a name of the functional module, an index of the functional module, and version information of the functional module.

It should be noted that, the legacy mode refers to a predefined working mode, or a working mode that does not support a functional module.

It should be noted that the start time of the fallback may be represented by a Time Delay (equivalent to the described time delay), and the occurrence time of step 1 is used as a reference time point (equivalent to the described time reference point).

It should be noted that, functional modules of a plurality of versions provided by the foregoing AI Server (equivalent to the foregoing third node) may enable the UE (equivalent to the foregoing first node) to select a functional module suitable for its version, and alternatively, the UE (equivalent to the foregoing first node) may also select to fall back to the legacy mode.

In step 2, the UE (equivalent to the described first node) sends fallback confirmation information. The UE may choose to directly send the fallback confirmation information to the AI Server (equivalent to the described third node), or send the fallback confirmation information through the forwarding by a TRP (equivalent to the described second node). The fallback confirmation information includes at least one of: a start time of the fallback, functional module version information of the fallback used by the UE (equivalent to the described first node), and indication information for falling back to the legacy mode.

It should be noted that the start time of the fallback in step 2 may be represented by a Time Delay (equivalent to the described time delay), and the occurrence time of step 2 is used as a reference time point (equivalent to the described time reference point).

In step 3a, the UE (equivalent to the described first node) downloads a functional module of a corresponding version. Further, when the effective time of the functional module is reached, the UE (equivalent to the described first node) uses the functional module to communicate with the TRP (equivalent to the described second node).

In step 3b, when the effective time of the functional module is reached, the UE (equivalent to the described first node) returns to the legacy mode to communicate with the TRP (equivalent to the described second node).

It should be noted that, only one of the foregoing step 3a and step 3b is executed, and after one of the foregoing step 3a and step 3b is executed, the other step of the foregoing step 3a and step 3b is not executed again in the current implementation.

It should be noted that the described TRP (equivalent to the described second node) and the AI Server (equivalent to the described third node) may exist in the same entity.

### Embodiment 3

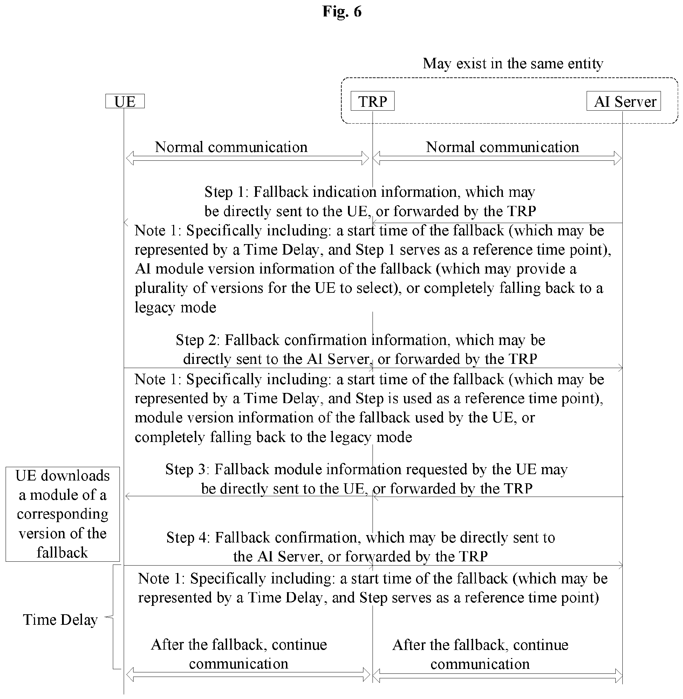

In this embodiment, an information transmission method is described in conjunction with Fig. 6. Fig. 6 is a schematic flowchart (3) of an exemplary information transmission method according to some embodiments of the present disclosure. As shown in Fig. 6, the exemplary information transmission method includes the following steps.

In step 1, an AI Server (equivalent to the described third node) sends fallback indication information. The AI Server may choose to directly send the fallback indication information to a UE (equivalent to the described first node), or send the fallback indication information through the forwarding by a TRP (equivalent to the described second node). The fallback indication information includes at least one of: functional module information of the fallback, falling back to a legacy mode, and a start time of the fallback.

It should be noted that, the functional module information of the fallback includes at least one of: a name of the functional module, an index of the functional module, and version information of the functional module.

It should be noted that, the legacy mode refers to a predefined working mode, or a working mode that does not support a functional module.

It should be noted that the start time of the fallback may be represented by a Time Delay (equivalent to the described time delay), and the occurrence time of step 1 is used as a reference time point (equivalent to the described time reference point).

In step 2, the UE (equivalent to the described first node) sends fallback request information. The UE may choose to directly send the fallback request information to the AI Server (equivalent to the described third node) or send the fallback request information through the forwarding by a TRP (equivalent to the described second node). The fallback confirmation information includes at least one of: a start time of the fallback, and functional module version information of the fallback used by the UE (equivalent to the described first node).

It should be noted that the precondition of executing step 2 is that the UE (equivalent to the first node) detects that the fallback indication information sent by the AI Server (equivalent to the third node) does not have a functional module suitable for the UE (equivalent to the first node) or a functional module suitable for a version used by the UE (equivalent to the first node).

It should be noted that the start time of the fallback in step 2 may be different from the start time of the fallback in step 1.

In step 3, the AI Server (equivalent to the described third node) sends the functional module information requested by the UE (equivalent to the described first node). The AI Server may send the functional module information directly to the UE (equivalent to the described first node), or through the forwarding by the TRP (equivalent to the described second node).

In step 4, after downloading a corresponding functional module, the UE (equivalent to the described first node) sends fallback confirmation information. The UE choose to send the fallback confirmation information directly to the AI Server (equivalent to the described third node), or send the fallback confirmation information through the forwarding by the TRP (equivalent to the described second node). The fallback confirmation information includes a start time of the fallback.

It should be noted that the start time of the fallback in step 4 may be represented by a Time Delay (equivalent to the described time delay), and the occurrence time of step 4 is used as a reference time point (equivalent to the described time reference point).

### Embodiment 4

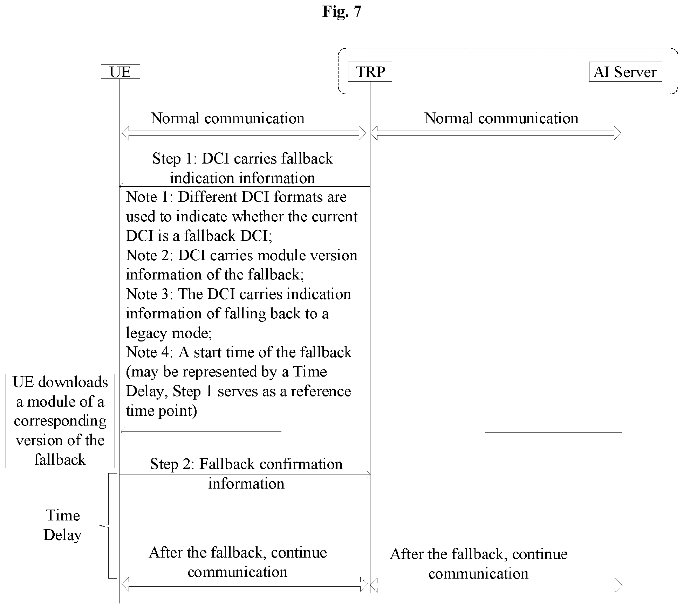

In this embodiment, an information transmission method is described with reference to Fig. 7. Fig. 7 is a schematic flowchart (4) of an exemplary information transmission method according to some embodiments of the present disclosure. As shown in Fig. 7, the exemplary information transmission method includes the following steps.

In step 0, a TRP sends indication information to a UE (equivalent to the described first node). The indication information is used for indicating whether a corresponding DCI is a normal DCI or a fallback DCI, and is used for indicating whether the TRP (equivalent to the described second node) will send the fallback DCI. Further, the TRP (equivalent to the described second node) may send the fallback DCI and the normal DCI at the same time. In a case where the UE (equivalent to the described first node) detects the fallback DCI, the flow proceeds to step 1.

It should be noted that the foregoing step 0 is an optional functional step.

In step 1, the TRP (equivalent to the described second node) sends a downlink control channel (e.g., a Physical Downlink Control Channel (PDCCH)) to send a fallback DCI. A DCI format is used to indicate whether the current DCI is a DCI indicating fallback; or whether the current DCI is a fallback DCI is indicated in the DCI.

At least one of the following pieces of information is borne in the fallback DCI: functional module version information of the fallback, indication information indicating to fall back to a legacy mode, and a start time of the fallback.

It should be noted that DCI refers to Downlink Control Information carried in the PDCCH.

In step 2, after downloading the functional module of the corresponding version of the fallback, the UE (equivalent to the described first node) sends fallback confirmation information to the TRP (equivalent to the described second node).

### Embodiment 5

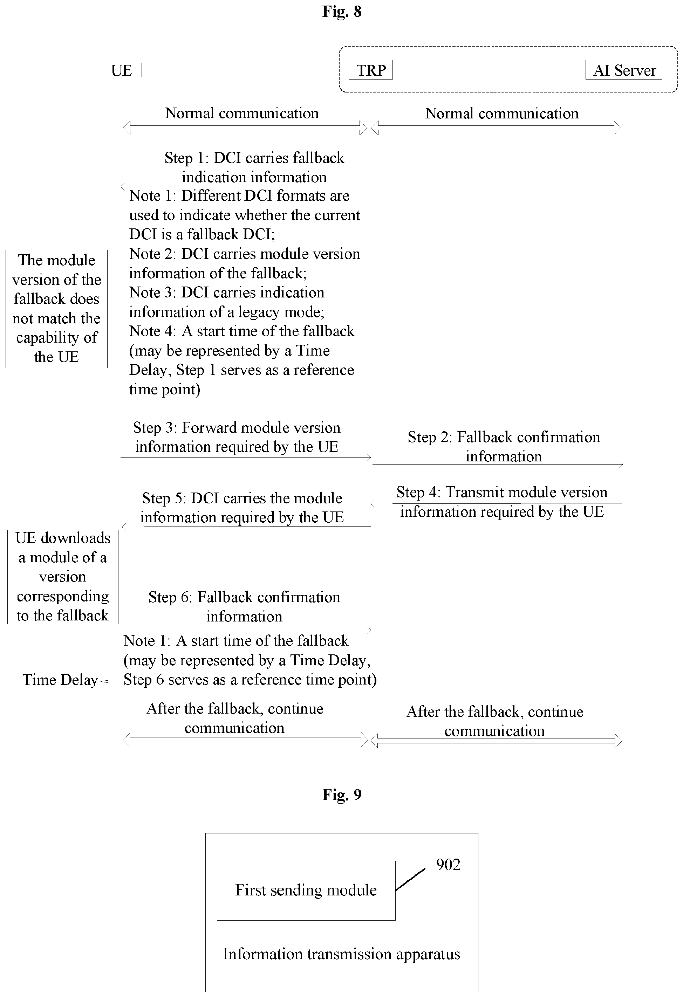

In this embodiment, an information transmission method is described with reference to Fig. 8. Fig. 8 is a schematic flowchart (5) of an exemplary information transmission method according to some embodiments of the present disclosure. As shown in Fig. 8, the exemplary information transmission method includes the following steps.

In step 0, a TRP sends indication information to a UE (equivalent to the described first node). The indication information is used for indicating whether a corresponding DCI is a normal DCI or a fallback DCI, and is used for indicating whether the TRP (equivalent to the described second node) will send the fallback DCI. Further, the TRP (equivalent to the described second node) may send the fallback DCI and the normal DCI at the same time. In a case where the UE (equivalent to the described first node) detects the fallback DCI, the flow proceeds to step 1.

It should be noted that the foregoing step 0 is an optional functional step.

In step 1, the TRP (equivalent to the described second node) sends a downlink control channel (e.g., a PDCCH) to send the fallback DCI. The DCI format is used for indicating whether the current DCI is a DCI indicating fallback; or whether the current DCI is a fallback DCI is indicated in the DCI.

At least one of the following pieces of information is borne in the fallback DCI: functional module version information of the fallback, indication information indicating to fall back to a legacy mode, and a start time of the fallback.

It should be noted that DCI refers to Downlink Control Information carried in PDCCH.

In step 2, after receiving the fallback DCI, the UE (equivalent to the described first node) finds that the functional module version information of the fallback does not match the capability of the UE (equivalent to the described first node), and then the UE (equivalent to the described first node) sends functional module request information to the TRP (equivalent to the described second node). The functional module request information sent by the TRP (equivalent to the described second node) includes functional module information of a version required by the UE (equivalent to the described first node).

In step 3, the TRP (equivalent to the described second node) sends the functional module information of the version required by the UE (equivalent to the described first node) to the AI Server (equivalent to the described third node).

In step 4, the AI Server (equivalent to the described third node) sends the functional module information of the version required by the UE (equivalent to the described first node) to the TRP (equivalent to the described second node).

In step 5, the TRP (equivalent to the described second node) carries the functional module information required by the UE (equivalent to the described first node) in a DCI.

In step 6, after downloading the functional module of the corresponding version, the UE (equivalent to the described first node) sends fallback confirmation information to the TRP (equivalent to the described second node).

Through the description of the foregoing embodiments, those having ordinary skill in the art may clearly understand that the information transmission method according to the foregoing embodiments may be implemented by software in addition to a necessary universal hardware platform, and definitely may also be implemented by hardware. However, in many cases, the former is a preferred implementation. Based on such understanding, the essence of the technical solutions of the present disclosure or the part contributing to the related art may be embodied in the form of a software product, the computer software product is stored in a storage medium (such as a Read Only Memory (ROM)/Random Access Memory (RAM), a magnetic disk, and an optical disk), and includes several instructions for instructing a first node device (which may be a mobile phone), a computer, a server, a network device, or the like.

The embodiments further provide an information transmission apparatus, which is configured to implement the described embodiments and implementations, and what has been described will not be elaborated. The term "module", as used hereinafter, is a combination of software and/or hardware capable of realizing a predetermined function. Although the apparatus described in the following embodiments is preferably implemented by software, implementation of hardware or a combination of software and hardware is also possible and conceived.

Fig. 9 is a structural block diagram of an information transmission apparatus according to some embodiments of the present disclosure. As shown in Fig. 9, the information transmission apparatus includes:
a first sending module 902, configured to send first fallback request information to a third node or a second node, wherein the first fallback request information includes at least one of: a fallback reason, functional module information of a first fallback, falling back to a legacy mode, and a start time of the first fallback.

By means of the described information transmission apparatus, first fallback request information is sent to a third node or a second node, wherein the first fallback request information includes at least one of: a fallback reason, functional module information of a first fallback, falling back to a legacy mode, and a start time of the first fallback. By means of the above operation, the problem in the related art that there is no scheme for an interaction process of first fallback request information between a first node (e.g., a terminal) and a second node or third node may be solved, and the technical effect that the first node sends the first fallback request information to the third node or the second node is achieved.

In an exemplary embodiment, the first sending module 902 is further configured to perform at least one of: directly sending the first fallback request information to the third node; and sending the first fallback request information to a second node, so that the second node forwards the first fallback request information to the third node.

In an exemplary embodiment, the information transmission apparatus further includes a first receiving module 904 configured to perform at least one of: receiving first fallback confirmation information directly sent by the third node; and receiving first fallback confirmation information sent by the third node to the second node and forwarded by the second node.

In an exemplary embodiment, the first receiving module 904 is further configured to receive first fallback confirmation information sent by the third node or the second node, wherein the first fallback confirmation information includes at least one of: indication information regarding whether to accept the first fallback request information, a start time of a second fallback, functional module information of the second fallback, and falling back to the legacy mode.

In an exemplary embodiment, the first receiving module 904 is further configured to execute at least one of: determining, in a case where the first fallback confirmation information includes the functional module information of the second fallback, to use a functional module corresponding to the functional module information of the second fallback; determining, in a case where the first fallback confirmation information does not include the functional module information of the second fallback, to use a functional module corresponding to the functional module information of the first fallback; falling back to the legacy mode.

In an exemplary embodiment, the first receiving module 904 is further configured to, in a case where the first fallback confirmation information includes the start time of the second fallback, after the start time of the second fallback, use a functional module to communicate with the second node, or using the legacy mode to communicate with the second node or the third node; in a case where the first fallback confirmation information does not include the start time of the second fallback, after the start time of the first fallback, use a functional module to communicate with the second node, or using the legacy mode to communicate with the second node or the third node.

In an exemplary embodiment, the functional module information includes at least one of: a name of a functional module; an index of the functional module; version information of the functional module; and a function realized by the functional module.

In an exemplary embodiment, the first receiving module 904 is further configured to, in a case where the fallback reason is indicated by means of index information, indicate a preset fallback reason by means of the fallback reason, wherein description information of the fallback reason is stored in at least one of: the first node, the second node and the third node.

In an exemplary embodiment, the time at which the first fallback request information is sent to the third node is used as a time reference point, and the start time of the first fallback is represented by a time delay.

In an exemplary embodiment, the time at which the first fallback confirmation information sent by the third node is received is used as a time reference point, and the start time of the second fallback is represented by a time delay.

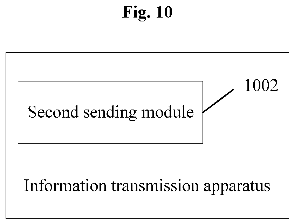

Fig. 10 is a structural block diagram of another information transmission apparatus according to some embodiments of the present disclosure. As shown in Fig. 10, the information transmission apparatus includes:
a second sending module 1002, configured to send first fallback indication information to a first node, wherein the first fallback indication information includes at least one of: functional module information of a third fallback, falling back to a legacy mode, and a start time of the third fallback.

By means of the information transmission apparatus, first fallback indication information is sent to a first node, wherein the first fallback indication information includes at least one of: functional module information of a third fallback, falling back to a legacy mode, and a start time of the third fallback. The problem of how to send first fallback indication information to a first node (e.g., a terminal) in the related art is solved, and the technical effect of sending the first fallback indication information to the first node is achieved.

In an exemplary embodiment, the second sending module 1002 is further configured to execute one of the following: directly sending the first fallback indication information to the first node; sending the first fallback indication information to a second node, so that the second node forwards the first fallback indication information to the first node.

In an exemplary embodiment, the information transmission apparatus may further include a second receiving module 1004 configured to perform at least one of: receiving second fallback confirmation information directly sent by the first node; receiving second fallback confirmation information sent by the first node to the second node and then forwarded by the second node.

In an exemplary embodiment, the second receiving module 1004 is further configured to, in a case where the second fallback confirmation information includes functional module information of the fourth fallback, determine to use the functional module information of the fourth fallback to download a corresponding functional module; in a case where the second fallback confirmation information does not include the functional module information of the fourth fallback, determine to use the functional module information of the third fallback to download a corresponding functional module; and falling back to the legacy mode.

In an exemplary embodiment, the time at which the first fallback indication information is sent to the first node serves as a time reference point, and the start time of the third fallback is represented by using a time delay.

In an exemplary embodiment, the time at which the second fallback confirmation information sent by the first node is received is used as a time reference point, and the start time of the fourth fallback is represented by a time delay.

In an exemplary embodiment, the second receiving module 1004 is further configured to receive second fallback confirmation information sent by the first node, wherein the second fallback confirmation information includes at least one of: a start time of a fourth fallback, functional module information of the fourth fallback, and indication information for falling back to the legacy mode. The functional module information of the fourth fallback is obtained from the functional module information of the third fallback.

In an exemplary embodiment, the functional module information of the third fallback includes at least one piece of functional module information, wherein each of the at least one piece of functional module information includes at least one of: a name of a functional module, an index of the functional module, version information of the functional module, and a function realized by the functional module.

In an exemplary embodiment, the second receiving module 1004 is further configured to execute at least one of: in a case where the second fallback confirmation information includes the functional module information of the fourth fallback, determining to download a corresponding functional module by using the functional module information of the fourth fallback; in a case where the second fallback confirmation information does not include the functional module information of the fourth fallback, determining to use the functional module information of the third fallback to download a corresponding functional module; falling back to the legacy mode.

In an exemplary embodiment, the second receiving module 1004 is further configured to execute at least one of: in a case where the second fallback confirmation information includes the start time of the fourth fallback, after the start time of the fourth fallback, using the functional module to communicate with a second node, or using the legacy mode to communicate with the second node; in a case where the second fallback confirmation information does not include the start time of the fourth fallback, after the start time of the third fallback, using the functional module to communicate with the second node, or using the legacy mode to communicate with the second node.

In an exemplary embodiment, the functional module information required by the first node is sent in the second fallback confirmation information or in first functional module request information after the second fallback confirmation information.

In an exemplary embodiment, the second sending module 1002 is further configured to send response information for the functional module information required by the first node, wherein the response information includes at least one of: the functional module information required by the first node; and fallback start time of the functional module information required by the first node.

In an exemplary embodiment, the second sending module 1002 is further configured to send the first fallback indication information to the first node through control information in a control channel, and specifically, send the first fallback indication information to the first node through a Physical Downlink Control Channel (PDCCH).

In an exemplary embodiment, the second sending module 1002 is further configured to execute at least one of: indicating, by using a format of control information, whether current control information is control information that triggers the first fallback indication information; carrying the first fallback indication information in the control information in the control channel for sending.

Specifically, a downlink control information DCI format is used for indicating whether a current PDCCH is a PDCCH triggering the first fallback indication information.

In an exemplary embodiment, the second sending module 1002 is further configured to send indication information before indicating whether a current PDCCH is a PDCCH which triggers the first fallback indication information by means of a DCI format, wherein the indication information is used for indicating whether the corresponding DCI is a normal DCI or a fallback DCI for indicating fallback.

It should be noted that each module may be implemented by software or hardware. The latter may be implemented in the following manner, but is not limited thereto. All the modules are located in a same processor; alternatively, the modules are located in different processors in an arbitrary combination.

The embodiments of the present disclosure also provide a computer readable storage medium. The computer readable storage medium stores a computer program, wherein the computer program, when running on a processor, causes the processor to execute the operations in any one of the described method embodiments.

In an exemplary embodiment, the computer readable storage medium may include, but is not limited to, any medium that can store a computer program, such as a Universal Serial Bus (USB) flash drive, a Read-Only Memory (ROM), a Random Access Memory (RAM), a removable hard disk, a magnetic disk, or an optical disc.

In an exemplary embodiment, the described storage medium may be provided to perform the following operation:
S1, sending first fallback request information to a third node or a second node, wherein the first fallback request information includes at least one of: a fallback reason, functional module information of a first fallback, falling back to a legacy mode, and a start time of the first fallback.

In another exemplary embodiment, the described storage medium may be configured to execute the following operation:
S1, sending first fallback indication information to a first node, wherein the first fallback indication information includes at least one of: functional module information of a third fallback, falling back to a legacy mode, and a start time of the third fallback.

For specific embodiments/examples in this embodiment, reference may be made to the embodiments described in the foregoing embodiments and exemplary embodiments, and details are not repeatedly described in this embodiment.

The embodiments of the present disclosure further provide an electronic apparatus, including a memory and a processor. The memory stores a computer program. The processor is configured to run the computer program to execute operations in any one of the method embodiments.

**In** an exemplary embodiment, the electronic apparatus may further include a transmission device and an input/output device, wherein the transmission device is connected to the processor, and the input/output device is connected to the processor.

**In** an exemplary embodiment, the above processor may be configured to run the computer program to perform the following operation:
S1, sending first fallback request information to a third node or a second node, wherein the first fallback request information includes at least one of: a fallback reason, functional module information of a first fallback, falling back to a legacy mode, and a start time of the first fallback.

**In** another exemplary embodiment, the processor may be configured to run the computer program to perform the following operation:
S1, sending first fallback indication information to a first node, wherein the first fallback indication information includes at least one of: functional module information of a third fallback, falling back to a legacy mode, and a start time of the third fallback.

For specific embodiments/examples in this embodiment, reference may be made to the embodiments described in the foregoing embodiments and exemplary embodiments, and details are not repeatedly described in this embodiment.

Obviously, those having ordinary skill in the art should understand that each module or each operation of the present disclosure can be implemented by a universal computing apparatus, they may be centralized on a single computing apparatus or distributed on a network composed of a plurality of computing apparatuses, they can be implemented by program codes executable by a computing apparatus, and thus can be stored in a storage apparatus and executed by the computing apparatus, furthermore, in some cases, the shown or described operations may be executed in an order different from that described here, or they are made into integrated circuit modules respectively, or a plurality of modules or operations therein are made into a single integrated circuit module for implementation. As such, the present disclosure is not limited to any particular hardware and software combination.

The foregoing descriptions are merely embodiments of the present disclosure, but are not intended to limit the present disclosure. For those having ordinary skill in the art, the present disclosure may have various modifications and variations. Any modifications, equivalent replacements, improvements and the like made within the principle of the present disclosure shall belong to the scope of protection of the present disclosure.

## Claims

1. An information transmission method, comprising:
sending first fallback request information to a third node or a second node, wherein the first fallback request information comprises at least one of: a fallback reason, functional module information of a first fallback, falling back to a legacy mode, and a start time of the first fallback.

2. The information transmission method according to claim 1, wherein after the sending first fallback request information to a third node or a second node, the information transmission method further comprises:
receiving first fallback confirmation information sent by the third node or the second node, wherein the first fallback confirmation information comprises at least one of: indication information regarding whether to accept the first fallback request information, a start time of a second fallback, functional module information of the second fallback, and falling back to the legacy mode.

3. The information transmission method according to claim 2, wherein after the receiving first fallback confirmation information sent by the third node or the second node, the information transmission method further comprises at least one of:
determining, in a case where the first fallback confirmation information comprises the functional module information of the second fallback, to use a functional module corresponding to the functional module information of the second fallback;
determining, in a case where the first fallback confirmation information does not comprise the functional module information of the second fallback, to use a functional module corresponding to the functional module information of the first fallback;
falling back to the legacy mode.

4. The information transmission method according to claim 2, wherein the information transmission method further comprises at least one of:
in a case where the first fallback confirmation information comprises the start time of the second fallback, after the start time of the second fallback, using a functional module to communicate with the second node, or using the legacy mode to communicate with the second node or the third node;
in a case where the first fallback confirmation information does not comprise the start time of the second fallback, after the start time of the first fallback, using a functional module to communicate with the second node, or using the legacy mode to communicate with the second node or the third node.

5. The information transmission method according to any one of claims 2 to 4, wherein the functional module information comprises at least one of:
a name of a functional module;
an index of the functional module;
version information of the functional module; and
a function realized by the functional module.

6. An information transmission method, comprising:
sending first fallback indication information to a first node, wherein the first fallback indication information comprises at least one of: functional module information of a third fallback, falling back to a legacy mode, and a start time of the third fallback.

7. The information transmission method according to claim 6, wherein after the sending first fallback indication information to a first node, the information transmission method further comprises:
receiving second fallback confirmation information sent by the first node, wherein the second fallback confirmation information comprises at least one of: a start time of a fourth fallback, functional module information of the fourth fallback, and information indicating falling back to the legacy mode.

8. The information transmission method according to claim 7, wherein the functional module information of the fourth fallback is obtained from the functional module information of the third fallback.

9. The information transmission method according to claim 6, further comprising:
the functional module information of the third fallback comprises at least one piece of functional module information, wherein each of the at least one piece of functional module information comprises at least one of:
a name of a functional module;
an index of the functional module;
version information of the functional module; and
a function realized by the functional module.

10. The information transmission method according to claim 7, wherein after the receiving second fallback confirmation information sent by the first node, the information transmission method further comprises at least one of:
determining, in a case where the second fallback confirmation information comprises the functional module information of the fourth fallback, to use a functional module corresponding to the functional module information of the fourth fallback;
determining, in a case where the second fallback confirmation information does not comprise the functional module information of the fourth fallback, to use a functional module corresponding to the functional module information of the third fallback;
falling back to the legacy mode.

11. The information transmission method according to claim 10, further comprising at least one of:
in a case where the second fallback confirmation information comprises the start time of the fourth fallback, after the start time of the fourth fallback, using the functional module to communicate with a second node, or using the legacy mode to communicate with the second node;
in a case where the second fallback confirmation information does not comprise the start time of the fourth fallback, after the start time of the third fallback, using the functional module to communicate with the second node, or using the legacy mode to communicate with the second node.

12. The information transmission method according to claim 7, further comprising:
sending, in the second fallback confirmation information or in first functional module request information after the second fallback confirmation information, functional module information required by the first node.

13. The information transmission method according to claim 12, wherein a third node or a second node sends response information for the functional module information required by the first node, wherein the response information comprises at least one of:
the functional module information required by the first node;
fallback start time of the functional module information required by the first node.

14. The information transmission method according to claim 6, wherein the sending first fallback indication information to a first node comprises:
sending the first fallback indication information to the first node through control information in a control channel.

15. The information transmission method according to claim 14, further comprising at least one of:
indicating, by using a format of control information, whether current control information is control information that triggers the first fallback indication information;
carrying the first fallback indication information in the control information in the control channel for sending.

16. The information transmission method according to claim 15, further comprising: sending, by a second node, indication information, wherein the indication information is used for indicating whether the control information comprises the control information of the first fallback indication information.

17. An information transmission apparatus, comprising:
a first sending module, configured to send first fallback request information to a third node or a second node, wherein the first fallback request information comprises at least one of: a fallback reason, functional module information of a first fallback, falling back to a legacy mode, and a start time of the first fallback.

18. An information transmission apparatus, comprising:
a second sending module, configured to send first fallback indication information to a first node, wherein the first fallback indication information comprises at least one of: functional module information of a third fallback, falling back to a legacy mode, and a start time of the third fallback.

19. A computer readable storage medium, wherein the computer readable storage medium stores a computer program, and the computer program, when running on a processor, is configured to cause the processor to execute the information transmission method according to any one of claims 1 to 5 or the information transmission method according to any one of claims 6 to 16.

20. An electronic apparatus, comprising a memory and a processor, wherein the memory stores a computer program, and the processor is configured to run the computer program so as to execute the information transmission method according to any one of claims 1 to 5 or the information transmission method according to any one of claims 6 to 16.
